# EUROPEAN PATENT APPLICATION

(11) **EP 2 472 455 A1**
(43) Date of publication of application: **04.07.2012**
(21) Application number: 11195208.1
(22) Date of filing: 22.12.2011
(51) Int. Cl.: G06Q 10/06

(54) **Method and system for outage restoration**

(30) Priority: 03.01.2011 US 983644
(71) Applicant: General Electric Company, Schenectady, NY 12345 (US)
(72) Inventor: McMullin, Dale Robert, Atlanta, GA 30339 (US)
(74) Representative: Cleary, Fidelma

(57) **Abstract**

An electric grid repair and operations system includes a work crew locator configured to receive a location of a work crew based on a location of a work vehicle associated with the work crew, a work crew management subsystem configured to receive a location of at least some of a plurality of work crews from the work crew locator, an asset management subsystem (128) configured to determine repair requirements for electric grid assets and repair times associated with the determined repair requirements, an outage management subsystem (124) configured to determine an outage occurrence using at least one of fault indications and trouble calls, and a restoration optimizer configured to determine a capable crew to respond to a grid configuration change request where the capable crew includes crew members qualified to perform the change request, tools and equipment required to effect the change request, and a work crew location determined to satisfy a response timing requirement, and initiate crew instructions detailing work requirements and actions for the work crew to fulfill the grid configuration change request.

## Description

### BACKGROUND OF THE INVENTION

The field of the invention relates generally to a method and a system for managing a power grid, and more specifically, to a method and system for managing outages and restoration from outages.

At least some known power grids include electricity generation plants such as a coal fire power plant, a nuclear power plant, electric power transmission assets such as high voltage transmission lines, electricity distribution assets, and interconnecting switching assets. One or more power companies may manage the power grid, including managing faults, maintenance, and upgrades related to the power grid. However, the management of the power grid is often inefficient and costly relying on telephone calls from consumers when an outage occurs or on field workers analyzing the local distribution network.

Outages and repairs involve switch plans and repair actions. The switch plans involve isolating the problem and then restoring the problem after repair. This total time of restoration directly affects reliability metrics, so utilities wish to minimize outage durations, minimize the boundaries of the total area affected by outages, and minimize the sections of de-energized grid that are isolated because of outages. Repair estimates are currently provided by individuals or simple device tables.

When the switching and repair actions are not automated, the time a dispatched work crew needs to get to the outage added to the repair time should be considered in restoration estimations. Time to arrive depends on their current position, and the ability for the crew to repair the outage depends on their inventory. Estimating time to restoration and repair (total switching) times currently does not include crew proximity and/or equipment availability. Current methods involve time estimates, reported manually by a crew.

### BRIEF DESCRIPTION OF THE INVENTION

The invention resides in an electric grid repair and operations system includes a work crew locator configured to receive a location of a work crew based on a location of a work vehicle associated with the work crew, a work crew management subsystem configured to receive a location of at least some of a plurality of work crews from the work crew locator, and an asset management subsystem configured to determine repair requirements for electric grid assets and repair times associated with the determined repair requirements. The system also includes an outage management subsystem configured to determine an outage occurrence using at least one of fault indications and trouble calls and a restoration optimizer configured to determine a capable crew to respond to a grid configuration change request where the capable crew includes crew members qualified to perform the change request, tools and equipment required to effect the change request, and a work crew location determined to satisfy a response timing requirement and initiate crew instructions detailing work requirements and actions for the work crew to fulfill the grid configuration change request. In some cases there may not be a time requirement beforehand...just that the closest available (not busy) crew with the qualifications and tools must be selected, and it is most important that the time of arrival be included in the restoration estimate..

The invention also resides in a method of managing electric grid operation and maintenance includes determining changes to one or more grid assets needed to effect a change to a configuration of the electric grid, determining a crew capability to effect the grid asset changes from a plurality of available crews, and determining an equipment requirement to effect the grid asset changes from a plurality of available equipment. The method further includes determining a location of the capable crew and the required equipment with respect to a location of one or more grid assets, generating crew instructions for effecting the change to the configuration of the electric grid using the determined capable crew, the determined required equipment, and the determined locations, the crew instructions including the location of the required equipment and the location of the one or more grid assets, and transmitting the crew instructions to at least the capable crew.

From a further aspect, the invention resides an outage management system includes a field force subsystem including a locator configured to communicate a location of at least some of a plurality of work crews, an equipment inventory subsystem configured to actively monitor a location of equipment associated with the plurality of work crews, and a mobile interface associated with each of the at least some of the plurality of work crews, the mobile interface configured to receive work crew instructions directing actions. The system also includes a centralized operational subsystem configured to calculate a time to completion of the work crew instructions based on a proximity of the work crew and equipment to the location of the work to be performed and an availability of the work crew.

### BRIEF DESCRIPTION OF THE DRAWINGS

Embodiments of the invention will now be described, by way of example only, with reference to the accompanying drawings, in which:
FIGS. 1-2 show exemplary embodiments of the method and system described herein.
FIG. 1 is a schematic block diagram of an electric grid operation and maintenance management system in accordance with an exemplary embodiment of the present invention; and
FIG. 2 is a flow diagram of a method of managing electric grid operation and maintenance in accordance with an exemplary embodiment of the present invention.

### DETAILED DESCRIPTION OF THE INVENTION

The following detailed description illustrates embodiments of the invention by way of example and not by way of limitation. It is contemplated that the invention has general application to analytical and methodical embodiments of managing operation and maintenance of widely geographically diverse assets in industrial, commercial, and residential applications.

As used herein, an element or step recited in the singular and preceded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

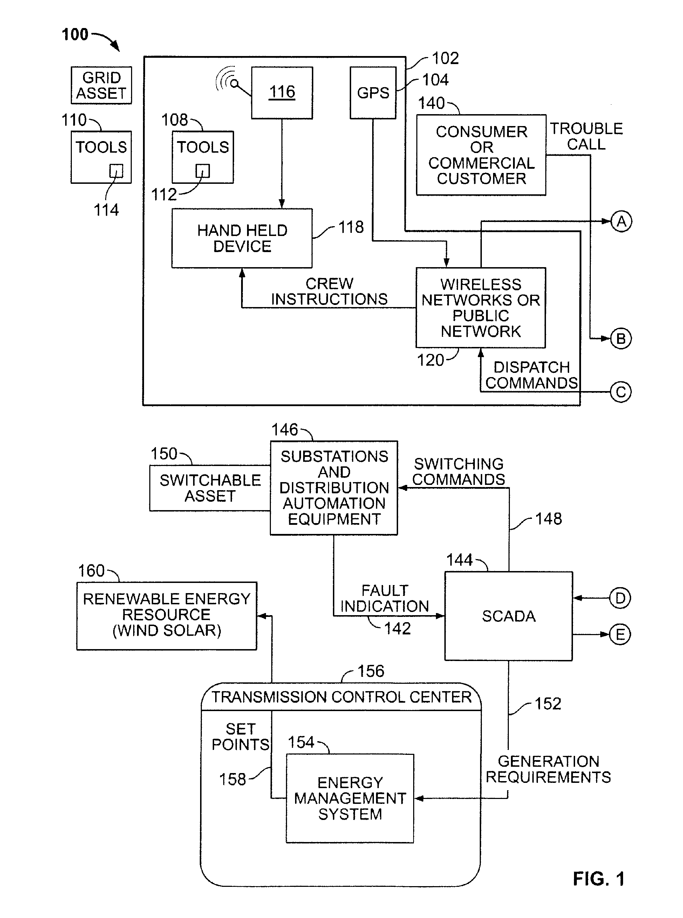

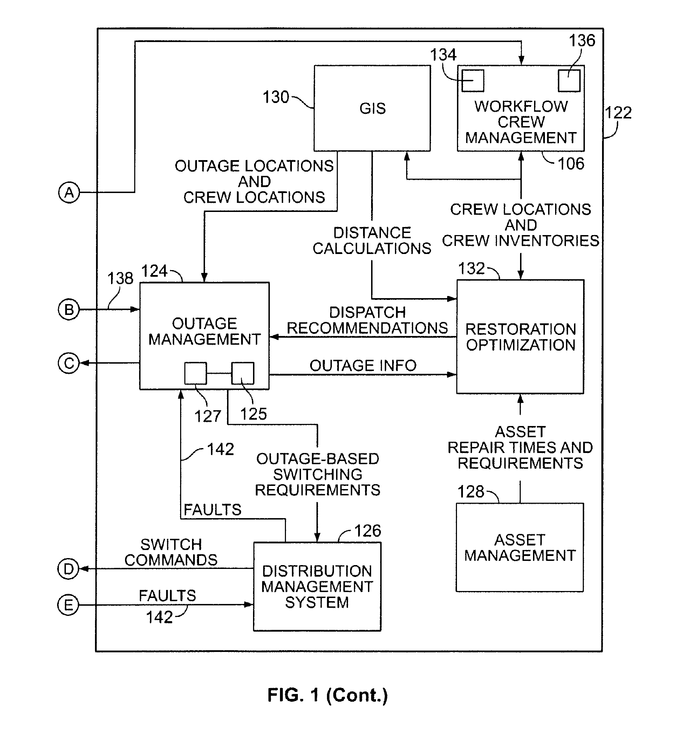

FIG. 1 is a schematic block diagram of an electric grid operation and maintenance management system 100 in accordance with an exemplary embodiment of the present invention. System 100 is configured to optimize a time of grid switching and repair recommendations based on an integration of work crew location and repair capability. In various embodiments, at least portions of system 100 may be integrated with an existing electric grid management system or system 100 may comprise a freestanding system capable of communicating with the existing electric grid management system. In the exemplary embodiment, system 100 includes a field force subsystem 102 that includes a GPS sensor 104 configured to communicate a location of at least some of a plurality of work crews to a centralized collection point, such as, but not limited to, a crew work flow management subsystem 106. Field force subsystem 102 typically comprises a work vehicle, such as a bucket truck or pole setting truck and a work crew assigned to the work vehicle. GPS sensor 104 is mounted to each work vehicle. Tools 108 and other maintenance and/or test equipment are typically stored on the work vehicle such that the work crew has tools 108 and other maintenance and/or test equipment available in the field. Additional tools 110 may be stored away from the work vehicle for example at a centralized or region dispatch center. The additional tools may include special use tools that are infrequently used and expensive tools that are shared amongst several work crews.

At least some of tools 108, tools 110, or other equipment may include tagging devices 112, 114 associated with each tool 108, 110. In one embodiment, tagging devices 112, 114 include radio frequency identification enabled tags or labels. An RFID reader 116 interrogates tools 108, 110 to ascertain their presence and/or precise location. RFID reader 116 may be embodied in a separate standalone device or may be incorporated into a hand held device 118, such as, but not limited to, a smart phone, a laptop, or other device capable of tracking tagged equipment and transmitting a status to crew work flow management subsystem 106. In various embodiments, other tracking devices are used to facilitate maintaining an accurate inventory of tools 108 and tools 110. Field force subsystem 102 includes a communications subsystem 120 configured to communicate crew and equipment statuses back to crew work flow management subsystem 106 in real time and to receive instructions for directing the movements and activities of the work crew.

System 100 includes a centralized operational subsystem 122 including an outage management (OMS) subsystem 124, a distribution management subsystem (DMS) 126, an asset management subsystem 128, a geographic information system (GIS) 130, and a restoration optimization subsystem 132.

OMS 124 is a system that assists a utility in managing outages by tracking location of outages, by managing work crews that are being dispatched by providing instructions for the work crews, and tracking reliability metrics associated with the duration and affected area of sustained outages. In one embodiment, OMS 124 includes a processor 125 configured to execute instructions stored in a memory 127 to perform the processes described herein. OMS 124 is configured to track outages and estimates a baseline time to restoration from the outages. OMS 124 is also configured to track crew work orders and instructions, their status, and determines a time estimate until the work crew is free to do additional work. DMS 126 is a distribution system level control system that controls the devices in the substations and feeder devices (for example) for distribution grids. DMS 126 is configured to create switch plans and execute the switch plans through distribution automation via a supervisory control and data acquisition (SCADA) system 144. Crew work flow management subsystem 106 includes a data collection database and application 134 configured to track the GPS location of all work crews and a data collection database and application 136 configured to track the location of all tools 108, 110, test and other equipment. Crew work flow management subsystem 106 could be embodied as an integrated part of the OMS subsystem 124. GIS 130 includes a database that contains information about where assets are located geographically, numerous unchanging (static) properties of the assets, and how the assets are connected together. GIS 130 is coupled with OMS 124 and configured to associate crew locations with trouble areas, predicted outages, and confirmed outages associated with electric asset and conductor locations, and calculate a time for each crew to arrive at each outage location. Asset management subsystem 128 is configured to associate repair actions with assets, and to further estimate tools 108, 110 or other equipment required for a repair action or switching operation based on the asset involved, a type of outage and then estimates an amount of time it will take a work crew to acquire tools 108, 110, or other equipment. Restoration optimization subsystem 132 is configured to calculate an aggregated time to completion of the work crew instructions based on a proximity of the work crew and tools 108, 110 or other equipment to the location of the work to be performed and a crew availability.

During operation, an outage is determined from for example, a trouble call 138 initiated by a customer 140 or by a fault indication 142 through SCADA 144 from a substation and distribution automation equipment subsystem 146. Substation and distribution automation equipment subsystem 146 receives switching commands 148 from SCADA 144, processes switching commands 148 and transmits switching commands 148 to appropriate switchable assets 150 for actuation. Substation and distribution automation equipment subsystem 146 also receives fault indications 142 from switchable assets 150 and relays fault indication 142 through SCADA 144 and DMS 126 to OMS 124. SCADA 144 also provides generation requirements 152 to an energy management system 154 in a transmission control center 156. Energy management system 154 generates setpoints 158 for generation assets 160, such as, but not limited to, renewable energy resources, for example, wind and solar generation assets.

A need for a change to a configuration of the electric grid may be initiated for a variety of operational and maintenance reasons other than an outage. For example, new installation of equipment or replacement of existing equipment may require a switch plan to safely de-energize a section of conductor prior to performing the work. DMS 126 determines an isolation switch plan, a restoration switch plan, and OMS 124 creates a planned outage order associated with the switch plan, and OMS 124 also determines an approximately time to restoration based on the planned outage. The availability of each work crew capable of performing the work within a predetermined distance from the location where the work will be performed is determined. In various embodiments, determining if a crew is capable of performing the work includes determining a certification of crew members for performing or supervising the work. In some cases, the work to be performed may require crew members certified in two or more tasks, but an otherwise capable crew may be missing a crew member certified in one aspect of the work to be performed. In such a case, the availability of a single crew member from another work crew to be temporarily joined with the otherwise capable work crew and a time for the temporarily joined crew to be assembled. An inventory of tools 108 and test equipment associated with each crew is determined and compared to the tools and test equipment determined to be needed for the type of work to be performed. The time needed to acquire additional tools or other equipment 110 is added to the total time for each crew to respond to the outage or switching order. OMS 124 further determines the capable work crews closest to the outage and the time it will take the work crews to travel to the outage site. The recommended crews are displayed to the dispatcher or network operator. The desired crew is selected and dispatched by the dispatcher or network operator. In various embodiments, the desired crew may by automatically selected and dispatched. The additional time for that crew is added to the baseline switch plan or time to restoration and approximate reliability metrics are calculated and displayed to the dispatcher or network operator.

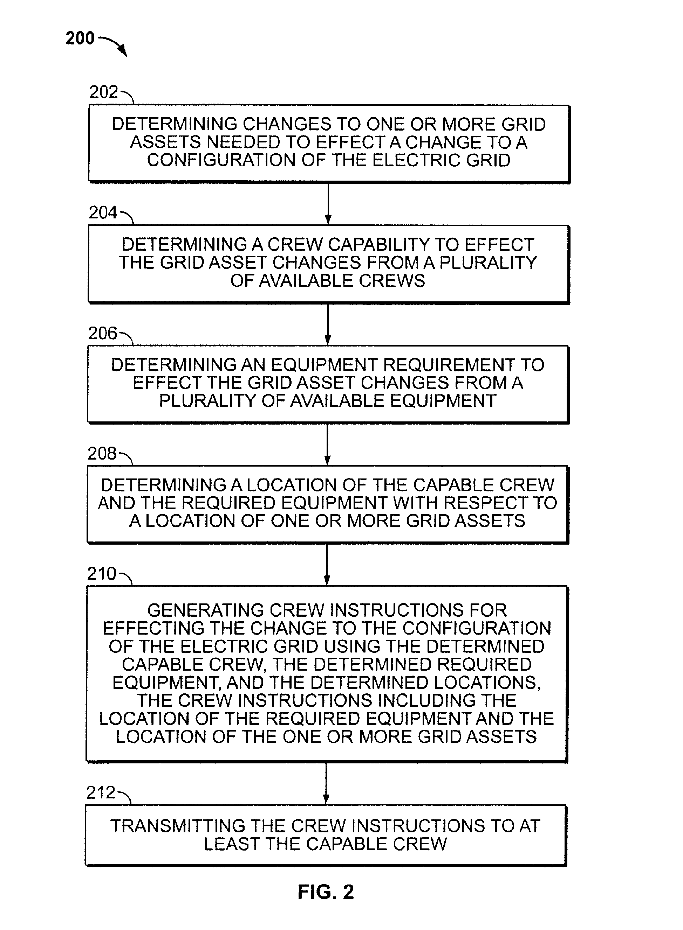

FIG. 2 is a flow diagram of a method 200 of managing electric grid operation and maintenance in accordance with an exemplary embodiment of the present invention. In the exemplary embodiment, method 200 includes determining 202 changes to one or more grid assets needed to effect a change to a configuration of the electric grid, determining 204 a crew capability to effect the grid asset changes from a plurality of available crews, and determining 206 an equipment requirement to effect the grid asset changes from a plurality of available equipment. Method 200 also includes determining 208 a location of the capable crew and the required equipment with respect to a location of one or more grid assets, generating 210 crew instructions for effecting the change to the configuration of the electric grid using the determined capable crew, the determined required equipment, and the determined locations, the crew instructions including the location of the required equipment and the location of the one or more grid assets, and transmitting 212 the crew instructions to at least the capable crew.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processor 125, including RAM memory, ROM memory, EPROM memory, EEPROM memory, and nonvolatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is providing a reliable means for establishing accurate reliability metrics that can be used to improve utility resource allocations, ensure faster outage restorations, and provide an ability to optimize work crew allocation and equipment provisions. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of managing electric grid operation and maintenance provides a cost-effective and reliable means for establishing accurate reliability metrics that can be used to improve utility resource allocations, ensure faster outage restorations, and provide an ability to optimize how crews are allocated and with what equipment As a result, the method and system described herein facilitate managing electric grid operation and maintenance in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An electric grid repair and operations system (100) comprising:
a work crew locator configured to receive a location of a work crew based on a location of a work vehicle (102) associated with the work crew;
a work crew management subsystem (106) configured to receive a location of at least some of a plurality of work crews from said work crew locator;
an asset management subsystem (128) configured to determine repair requirements for electric grid assets and repair times associated with the determined repair requirements;
an outage management subsystem (124) configured to determine an outage occurrence using at least one of fault indications and trouble calls; and
a restoration optimizer configured to:
determine a capable crew to respond to a grid configuration change request where the capable crew includes crew members qualified to perform the change request, tools and equipment required to effect the change request, and a work crew location determined to satisfy a response timing requirement; and
initiate crew instructions detailing work requirements and actions for the work crew to fulfill the grid configuration change request.

2. A system in accordance with Claim 1, wherein said outage management subsystem (124) is further configured to generate switching requirements for isolating an outage from the electric grid.

3. A system in accordance with Claim 1 or 2, further comprising a tool inventory subsystem configured to receive an inventory of tools associated with at least one of a work vehicle (102) associated with a work crew and a dispatch center.

4. A system in accordance with any of Claims 1 to 3, wherein said work crew locator comprises a GPS sensor (104) configured to determine a location of a work crew and communicate the determined location to said work crew locator.

5. A system in accordance with any of Claims 1 to 4, wherein said outage management subsystem (124) is configured to generate outage information and transmit the outage information to said restoration optimizer.

6. A system in accordance with any of Claims 1 to 5, wherein said work crew management subsystem is configured to receive an inventory of tools associated with the at least some of a plurality of work crews from said work crew locator.

7. A system in accordance with any of claims 1 or 2 comprising:
an equipment inventory subsystem configured to actively monitor a location of equipment associated with the plurality of work crews;
a mobile interface associated with each of the at least some of the plurality of work crews, said mobile interface configured to receive work crew instructions directing actions; and
a centralized operational subsystem (122) configured to calculate a time to completion of the work crew instructions based on a proximity of the work crew and equipment to the location of the work to be performed and an availability of the work crew.

8. A system (124) in accordance with Claim 7, wherein at least some of said equipment associated with the plurality of work crews comprises a radio frequency identification (RFID) tag and wherein said equipment inventory subsystem comprises an RFID reader (116) configured to interrogate said RFID tags to determine a location of the at least some of said equipment.

9. A system (124) in accordance with Claim 7 or 8, wherein said centralized operational subsystem (122) comprises the outage management subsystem (124) configured to track work crew instructions and determine a time estimate until the work crew is free to be assigned additional instructions.

10. A system (124) in accordance with Claim 7, 8 or 9, wherein said centralized operational subsystem (122) further comprises a geographic information subsystem (130) comprising a database of location information relative to electric grid assets and electric connections between the electric grid assets, said GIS configured to associate work crew locations with a plurality outage locations and calculate a time for at least one work crew to arrive at each outage location.

11. A method of managing electric grid operation and maintenance, said method comprising:
determining changes to one or more grid assets needed to effect a change to a configuration of the electric grid;
determining a crew capability to effect the grid asset changes from a plurality of available crews;
determining an equipment requirement to effect the grid asset changes from a plurality of available equipment;
determining a location of the capable crew and the required equipment with respect to a location of one or more grid assets;
generating crew instructions for effecting the change to the configuration of the electric grid using the determined capable crew, the determined required equipment, and the determined locations, the crew instructions including the location of the required equipment and the location of the one or more grid assets; and
transmitting the crew instructions to at least the capable crew.

12. A method in accordance with Claim 11, wherein determining changes to one or more grid assets comprises determining at least one of an isolation switch plan, a restoration switch plan, and a time to restoration.

13. A method in accordance with Claim 11 or 12, wherein determining a location of the capable crew comprises determining an availability of each work crew within a predetermined distance of the location of one or more grid assets and/or inventorying the equipment associated with each work crew.

14. A method in accordance with Claim 11, 12 or 13,, wherein determining a location of the capable crew comprises comparing an inventoried set of tools associated with the capable work crews and a required set of tools to complete the change to the configuration of the electric grid, and if a work crew requires an additional tool, the time to acquire the additional tool is added to a response time estimate for that work crew.

15. A method in accordance with any of claims 11 to 14, further comprising selecting a recommended work crew using a location of the capable crew, a response time associated with the capable crew, an inventory of tools associated with the capable work crews, and a required set of tools.
